# EUROPÄISCHE PATENTANMELDUNG

(11) **EP 1 876 061 A1**
(43) Veröffentlichungstag der Anmeldung: **09.01.2008**
(21) Anmeldenummer: 07012925.9
(22) Anmeldetag: 02.07.2007
(51) Int. Cl.: B60R 9/10, B62D 21/14

(54) **Trageinrichtung für Lasten, insbesondere Fahrräder**

(30) Priorität: 08.07.2006 DE 102006031694
(71) Anmelder: Magna Car Top Systems GmbH, 74321 Bietigheim-Bissingen (DE)
(72) Erfinder: Bergerhoff, Harald, 22143 Hamburg (DE); Waller, Michael, 22549 Hamburg (DE); Hahn, Gerald, 21255 Wistedt (DE)

(57) **Zusammenfassung**

Diese Trageinrichtung für Lasten, insbesondere Fahrräder, die in ein Kraftfahrzeug, insbesondere einen Personenkraftwagen eingebaut ist, weist einen Grundträger und einen für ein Fahrrad bestimmten Aufnahmeträger auf, welcher Aufnahmeträger aus einer im Personenkraftwagen versenkten Ruhestellung in eine das Fahrrad tragende über einen Aufbau des Personenkraftwagens hinausragende Betriebsstellung und vice versa verstellbar ist, wobei zwischen dem Grundträger und dem Aufnahmeträger formschlüssig zusammenwirkende Führungsschienen (9) und Stützschienen (11) vorgesehen sind.

Um diese Trageinrichtung vor allem bezüglich Funktion zu optimieren, ist zwischen jeder Führungsschiene (9) und Stützschiene (11) eine Festsetzeinrichtung (15) angeordnet ist, die aus einer Entriegelungsstellung in eine Sperrstellung betätigbar ist und die Festsetzeinrichtung zumindest in der Betriebsstellung des Aufnahmeträgers die Stützschiene relativ zur Führungsschiene fixiert.

## Beschreibung

Die Erfindung bezieht sich auf eine Trageinrichtung für Lasten, insbesondere Fahrräder, die in Kraftfahrzeug eingebaut ist nach dem Oberbegriff des Patentanspruchs 1.

Es ist ein aus einem Aufbau eines Kraftfahrzeugs herausziehbarer Lastenträger der eingangs beschrieben Gattung bekannt, DE 102 31 963 B4, der eine Lastenaufnahme aufweist. Die Lastenaufnahme ist mittels eines Schienensystems verschiebbar im Kraftfahrzeug gelagert. Bestandteil des Lastenträgers ist eine Fixierungseinrichtung, über die die Lastenaufnahme wahlweise in einer eingefahrenen Ruhestellung und einer ausgefahrenen Betriebsstellung festlegbar ist.

Aus der DE 44 41 853 A1 geht ein Kraftfahrzeug mit einem hinteren Stoßfänger hervor, der unter Zwischenschaltung mehrerer Profilstangen zwischen einer Ausfahrstellung und einer Ruhestellung verfahrbar ist. Stoßfänger und Profilstangen sind in der Weise ausgestaltet, dass sie als Trageinrichtung für Transportgut - Fahrräder- dienen.

Die DE 203 16 591 U1 gibt ein Kraftfahrzeug mit einer teleskopierbaren Stossstange wieder, die zur Aufnahme von Fahrrädern geeignet ist. Die Stossstange ist mit Kragträgern versehen, über die die Stoßstange in Endpositionen -Ruhestellung und Betriebstellung- verstellbar ist. Zwischen einem quer zur Fahrzeuglängsrichtung verlaufenden Fahrzeugrahmen ist eine Spreizvorrichtung vorgesehen, die federnd in Ausfahrrichtung der Stoßstange vorgespannt ist. Nach Entriegelung einer Sperreinrichtung fährt die Spreizvorrichtung selbsttätig in die Fahrräder aufnehmende
Endposition aus.

Es ist Aufgabe der Erfindung eine Trageinrichtung für Lasten, insbesondere Fahrräder, eingebaut in ein Kraftfahrzeug, insbesondere einen Personenkraftwagen zu schaffen, bei der ein zwischen einer Ruhestellung und einer Betriebsstellung relativbeweglicher an einem Grundträger gelagerter Aufnahmeträger für ein Fahrrad zumindest in der Betriebsstellung lagegesichert ist.

Nach der Erfindung wird diese Aufgabe durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass der Grundträger und der das Fahrrad haltende Aufnahmeträger in der Betriebsstellung von letzterem mittels der Festsetzeinrichtung einen steifen Trägerverbund bilden, der die auftretenden Belastungen namentlich im Fahrbetrieb des Personenkraftwagens funktionsgerecht aufnimmt. Die Stützschiene kragt in der Betriebsstellung des Aufnahmeträgers über die Führungsschiene hinaus, wobei die Festsetzeinrichtung den Grundträger und den Aufnahmeträger miteinander verspannen; ohne Festsetzeinrichtung würde der Aufnahmeträger im Fahrtrieb unkontrollierte Bewegungen ausüben. Das Sperrsystem der Festsetzeinrichtung ist problemlos zwischen Stützschiene und Führungsschiene vorsehbar. Das erste Sperrglied, das zweite Sperrglied wie auch die Hubeinrichtung des Sperrsystems sind einfach zu realisierende Bauteile. Sinngemäß gilt dies auch für den Lagerbolzen und das bewegliche Drehelement. Mit der Nockenvorrichtung der Hubeinrichtung lässt sich eine gezielte Sperr- und Entriegelungsstellung bewerkstelligen. Die Fixierungseinrichtung bzw. das Drehelement ist mit einem Handhebel versehen, durch den eine bedienungsfreundliche Betätigung der Fixierungseinrichtung möglich ist. Dass der Handhebel zur Bewegung des Drehelements zwischen Sperr- und Entriegelungsstellung etwa ein Winkel von 90° beschreibt und zumindest in der Entriegelungsstellung mittels einer Rasteinrichtung in Lage gehalten wird, unterstützt Funktion und Bedienungskomfort der Festsetzeinrichtung. Schließlich trägt zu besagtem Bedienungskomfort auch bei, dass für den Handhebel in der Entriegelungsstelung und der Verriegelungsstellung ein sinnfällige sichtbare Kennzeichnungen vorgesehen sind.

In der Zeichnung wird ein Ausführungsbeispiel der Erfindung gezeigt, das nachstehend näher erläutert wird.

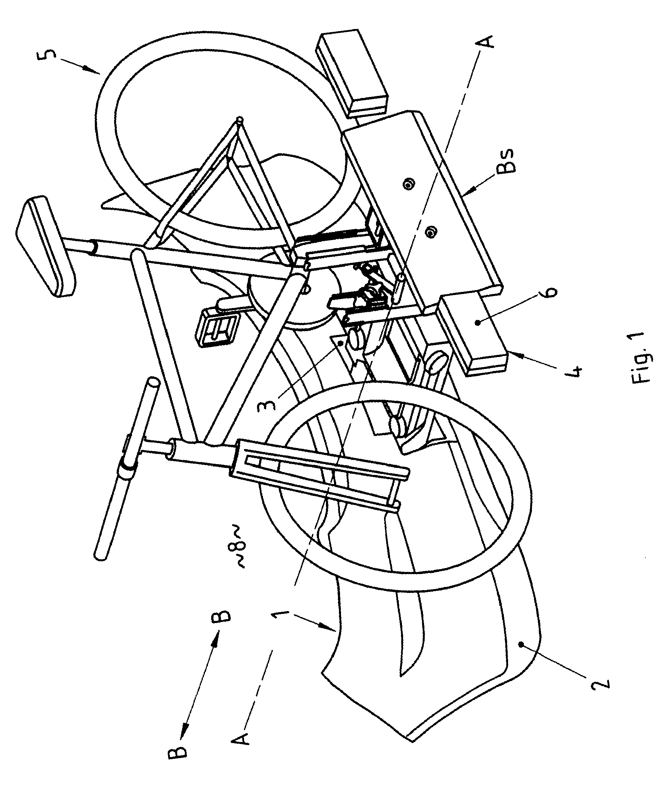

Es zeigen
Fig. 1 Eine Schrägansicht von hinten links oben auf einen Personenkraftwagen mit der erfindungsgemäßen Trageinrichtung,
Fig. 2 eine Schrägansicht von hinten links oben auf die sich in einer Betriebsstellung befindenden Trageinrichtung,
Fig. 3 eine Ansicht entsprechend Fig. 2, jedoch mit der sich in einer Ruhestellung befindenden Trageinrichtung,
Fig. 4 einen Schnitt nach der Linie IV-IV der Fig. 3,
Fig. 5 einen Schnitt als Prinzipdarstellung nach der Linie V-V der Fig. 4 in größerem Maßstab,
Fig. 6 einen Schnitt nach der Linie VI-VI der Fig. 3 als Prinzipdarstellung und in größerem Maßstab,
Fig. 7 eine Explosionsdarstellung von Einzelteilen der Festsetzeinrichtung nach der Erfindung.

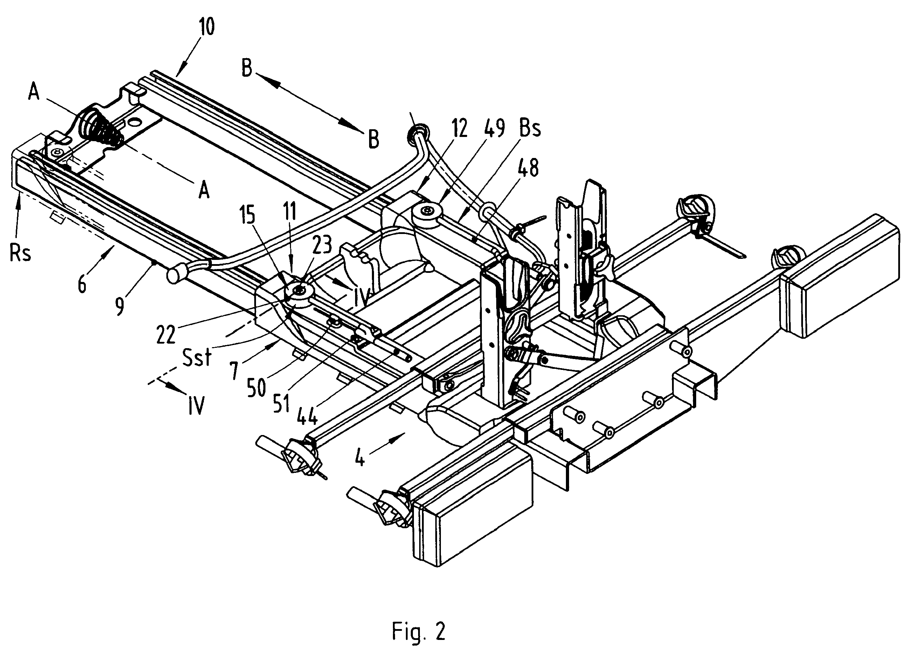

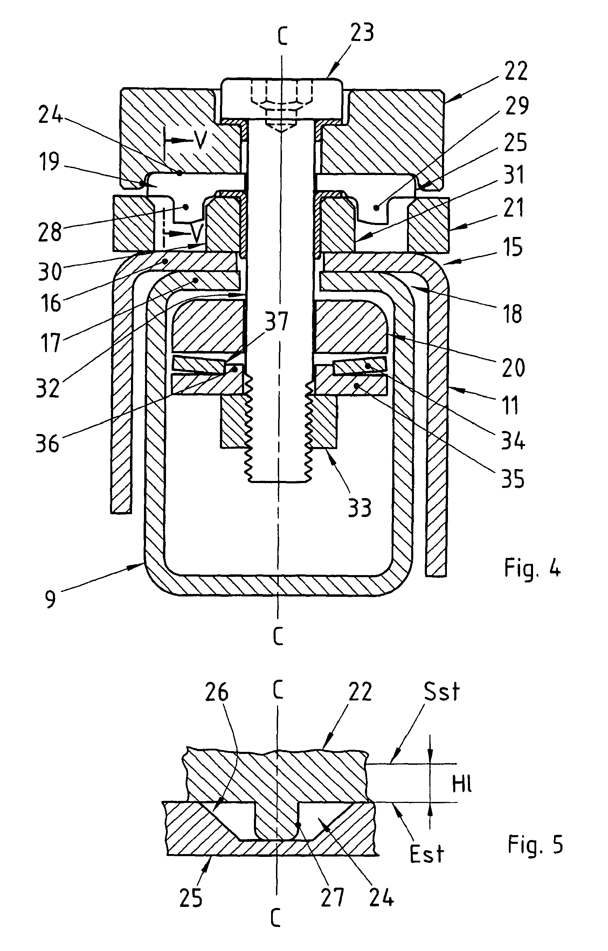

Von einem Personenkraftwagen 1 ist lediglich ein Heckteil 2 dargestellt, das in einer Mittellängsebene A-A -Fig. 2- eine Öffnung 3 zum Ausfahren einer Trageinrichtung 4 aufweist. Der Trageinrichtung 4 ist zum Transport von Lasten, will heißen eines Fahrrads 5, ausgebildet und umfasst einen Grundträger 6 und einen Aufnahmeträger 7 -Fig. 2-, an dem das quer zur Fahrzeuglängsrichtung B-B ausgerichtete Fahrrad 5 gehalten ist. Der Aufnahmeträger 7 ist in Fahrzeuglängsrichtung B-B gesehen aus einer in einem Aufbau 8 des Personenkraftwagens 1 versenkten Ruhestellung Rs in eine über den Aufbau 8 hinausragende Betriebsstellung Bs und vice versa verstellbar -Fig. 2-. Hierzu sind am Grundträger 6 beiderseits der Mittellängsebene A-A Führungsschienen 9 und 10 vorgesehen, die mit Stützschienen 11 und 12 des Aufnahmeträgers 7 zusammenarbeiten. Die Führungsschienen 9 und 10 und die Stützscheinen 11 und 12 wirken unter Formschluss zusammen, wobei die Führungsschienen 9 und 10 des Grundträgers 6 durch Rohrkörper 14 mit viereckigem Querschnitt gebildet werden -Fig. 4-. Dagegen weisen die Stützschienen 11 und 12 einen U-förmigen Querschnitt auf, der den viereckigen Querschnitt übergreift.

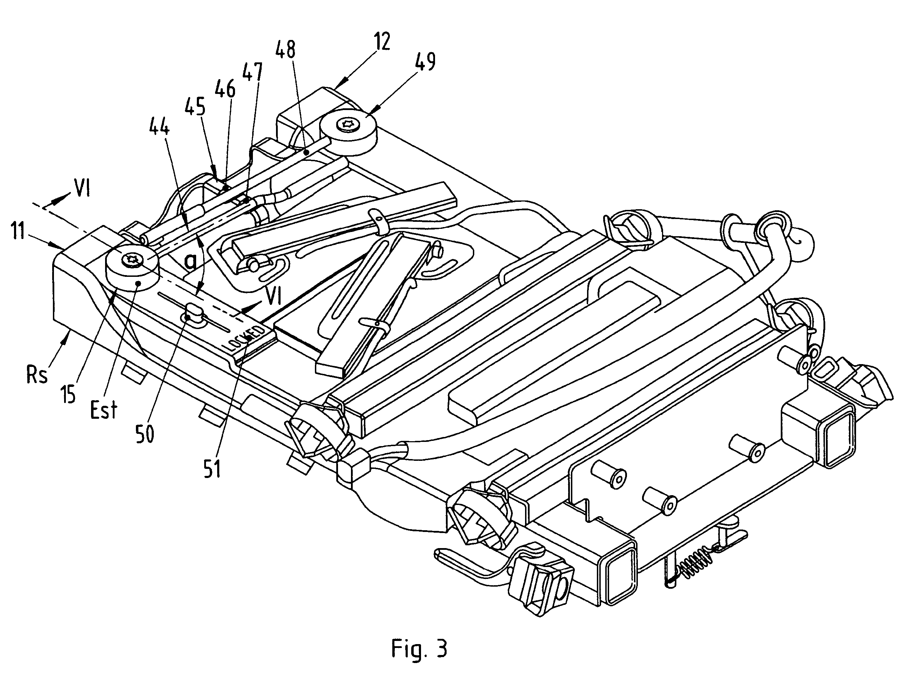

Zwischen jeder Führungsschiene z.B. 9 und jeder Stützschiene 11 ist eine Festsetzeinrichtung 15 vorgesehen, die aus einer Entriegelungsstellung Est -Fig. 3- in eine Sperrstellung Sst und vice versa -Fig. 2- betätigbar ist. Zumindest in der Betriebsstellung Bst des Aufnahmeträgers 7 fixiert die Festsetzeinrichtung 15 die Stützschiene 11 relativ zur Führungsschiene 9, und zwar dann, wenn die Festsetzeinrichtung 15 ihre Sperrstellung Sst einnimmt. Hierzu liegt eine Stützwand 16 der Stützschiene 11 auf einer Führungswand 17 der Führungsschiene 9 auf -Fig. 4-, welche Stützwand 16 und Führungswand 17 horizontal ausgerichtet sind. Zwischen Stützwand 16 und Führungswand 17 ist ein Sperrsystem 18 der Festsetzeinrichtung 15 wirksam. Das Sperrsystem 18 umfasst eine Hubeinrichtung 19, ein erstes unteres Sperrglied 20 und ein zweites oberes Sperrglied 21, wobei das erste Sperrglied 20 mit der Führungswand 17 und das zweite Sperrglied 21 mit der Stützwand 16 zusammenarbeiten.

Die Hubeinrichtung 19 ist mit einem als Drehelement 22 versehen -Fig. 2 und 4-, das um einen Lagerbolzen 23 der Festseteinrichtung 15 verschwenkbar ist. Der Lagerbolzen 23 hält einerseits das Drehelement 22, die Hubeinrichtung 19 sowie das zweite Sperrglied 21 und andererseits das erste Sperrglied 20 in Lage. Die Hubeinrichtung 19 weist eine Nockenvorrichtung 24 auf, die zwischen dem Drehelement 22 und zweiten Sperrglied 21 wirksam ist -Fig. 4 und 5-. Die Nockenvorrichtung 24 ist mit einer Zwischenscheibe 25 ausgestattet, in die eine Nockenbahn 26 eingearbeitet ist. Das die Form eines zylinderartigen Körpers aufweisende Drehelement 22 ist auf der der Nockenbahn 26 zugekehrten Seite mit einem Nocken 27 versehen, der bei Rotation des Drehelements 22 um eine Drehachse C-C des Lagerbolzen 23 entlang der Nockenbahn 26 gleitet und aus der Entriegelstellung Est in die Sperrstellung Sst geführt wird. Bei dieser Drehbewegung des Drehelements 22 bewirkt der Nocken 27 in axialer Richtung D eine Hubbewegung mit der Hublänge HI. Die Zwischenscheibe 25 der Nockenvorrichtung 24 ist am zweiten Sperrglied 21 befestigt. Hierzu sind an der Zwischenscheibe 25 Fixierungszapfen 28 und 29 vorgesehen, die in korrespondierende Ausnehmungen 30 und 31 hineinragen.

Der Lagerbolzen 23 durchdringt mit einem Schaft 32 die Stützwand 16 und die Führungswand 17 und ist auf einer dem Drehelement 22 abgekehrten Seite mit einer Schraubenmutter 33 versehen, die das erste Sperrglied 20 in axialer Richtung sichert. Zwischen dem ersten Sperrglied 2 und der Führungswand 17 ist ein Federelement vorgesehen, das durch eine Tellerfeder 34 gebildet wird. Zwischen Tellerfeder 34 und Schraubenmutter 33 ist eine Stützscheibe 35 eingesetzt, die mit einem zapfenartigen Ansatz 36 in eine Bohrung 37 der Tellerfeder 34 hineinragt.

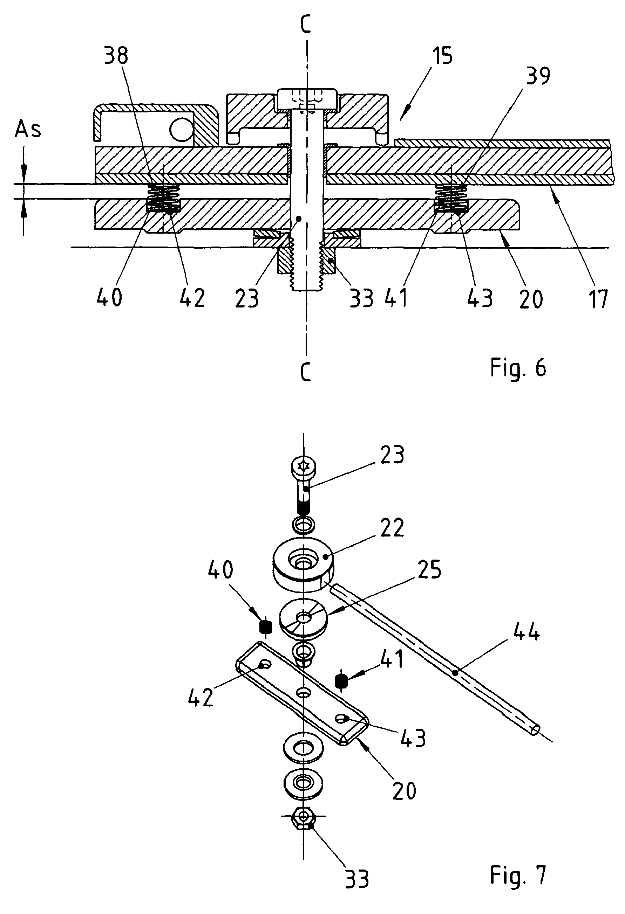

In Fig. 6 wird gezeigt, dass von der Seite auf die Führungsschiene 9 bzw. die Stützschiene 11 gesehen das erste plattenartige Sperrglied 20 beiderseits des Lagerbolzens 23 erhabene zur Führungswand 17 hin gerichtete Stützglieder 38 und 39 aufweist, dergestalt, dass zwischen erstem Sperrglied 20 und Führungswand 17 ein Abstand As verbleibt, der in etwa der Hublänge HI entspricht. Die Stützglieder 38 und 39 werden im Ausführungsbeispiel durch Federelemente in Gestalt von Druckfedern gebildet, die als Druckfedern 40 und 41 ausgeführt und mittels Einbohrungen 42 und 43 im ersten Sperrglied 20 geführt werden.

Zur Bedienung der Festsetzeinrichtung 15 ist ein Handhebel 44 vorgesehen, der sich in radialer Richtung zum Drehelement 22 erstreckt und mit letzterem verbunden ist. Der Handhebel 44 ist stabförmig ausgebildet und in Längsrichtung gesehen mit einer definierten Elastizität versehen, wobei der Handhebel 44 zur Bewegung des Drehelements 22 zwischen Sperrstellung Sst und Entriegelungsstellung Est einen Winkel α von ca. 90° beschreibt -Fig. 2 und 3-. Dabei wirkt der Handhebel 44 in der Entriegelungsstellung Est mit einer am Aufnahmeträger 7 angebrachten Rasteinrichtung 45 zusammen, die Ausnehmungen 46 und 47 zur Fixierung des Handhebels 44 und eines weiteren Handhebels 48 einer Festsetzeinrichtung 49 für die Führungsschiene 1o und Stützschienen 11 des Grundträgers 6 bzw. Aufnahmeträgers 7, und zwar in der jeweiligen Entriegelungsstellung Est. Dank der elastischen Ausbildung der Handhebel 44 und. 48 können letztere durch leichte manuelle Verformungen in die Ausnehmungen 46 und 47 eingerückt bzw. aus besagten Ausnehmungen ausgerückt werden. An der Oberseite der Stützschiene 11 ein Anschlag 50 zur Abstützung des Handhebels 43 in der Sperrstellung Sst angebracht. Schließlich ist für den Handhebel 44 zumindest in der Sperrstellung Sst eine sichtbare Kennzeichnung 51 mit den Aufnahmeträger 7 vorgesehen, die als Beschriftung LOCKED (=Schließstellung Sst) ausgeführt ist. Es ist aber auch möglich anstelle der Beschriftung eine sinnfällige Symbolik am Aufnahmeträger 7 anzubringen.

## Patentansprüche

1. Trageinrichtung für Lasten, insbesondere Fahrräder, die in ein Kraftfahrzeug, insbesondere einen Personenkraftwagen eingebaut ist und einen Grundträger und einen für ein Fahrrad bestimmten Aufnahmeträger aufweist, welcher Aufnahmeträger aus einer im Personenkraftwagen versenkten Ruhestellung in eine das Fahrrad tragende über einen Aufbau des Personenkraftwagens hinausragende Betriebsstellung und vice versa verstellbar ist, wobei zwischen dem Grundträger und dem Aufnahmeträger formschlüssig zusammenwirkende Führungsschienen und Stützschienen vorgesehen sind, **dadurch gekennzeichnet, dass** zwischen jeder Führungsschiene (9 und 10) und Stützschiene (11 und 12) eine Festsetzeinrichtung (15 und 49) angeordnet ist, die aus einer Entriegelungsstellung (Est) in eine Sperrstellung (SsT betätigbar ist und die Festseteinrichtung (15 und 49) zumindest in der Betriebsstellung (Bs) des Aufnahmeträgers (7) die Stützschiene (11 und 12) relativ zur Führungsschiene (9 und 10) fixiert.

2. Trageinrichtung nach Anspruch 1, **dadurch gekennzeichnet, dass** die Stützschiene (11) mit einer Stützwand (16) auf einer Führungswand (17) der Führungsschiene (9) aufliegt, zwischen denen ein Sperrsystem (18) der Festsetzeinrichtung (15) wirksam ist.

3. Trageinrichtung nach den Ansprüchen 1 und 2, **dadurch gekennzeichnet, dass** das Sperrsystem (18) eine Hubeinrichtung (19), ein erstes Sperrglied (20) und ein zweites Sperrglied (21) umfasst.

4. Trageinrichtung nach den Ansprüchen 2 und 3, **dadurch gekennzeichnet, dass** das erste Sperrglied (20) mit der Führungswand (17) und das zweite Sperrglied (21) mit der Stützwand (16) zusammenarbeiten.

5. Trageinrichtung nach den Ansprüchen 3 und 4, **dadurch gekennzeichnet, dass** die Hubeinrichtung (19) ein um einen Lagerbolzen (23) bewegliches Drehelement (22) aufweist.

6. Trageinrichtung nach Anspruch 5, **dadurch gekennzeichnet, dass** der Lagerbolzen (23) einerseits das Drehelement (22), die Hubeinrichtung (19) und das zweite Sperrglied (21) und andererseits das erste Sperrglied (20) in Lage hält.

7. Trageinrichtung nach Anspruch 6, **dadurch gekennzeichnet, dass** die Hubeinrichtung (19) eine Nockenvorrichtung (24) umfasst, die zwischen dem Drehelement (22) und dem zweiten Sperrglied (21) wirksam ist.

8. Trageinrichtung nach Anspruch 7, **dadurch gekennzeichnet, dass** die Nockenvorrichtung (24) eine Zwischenscheibe (25) besitzt, die am zweiten Sperrglied (21) befestigt ist.

9. Trageinrichtung nach Anspruch 8, **dadurch gekennzeichnet, dass** die Zwischenscheibe (25) mittels Fixierungszapfen (28 und 29) in korrespondierende Ausnehmungen (30 und 31) des zweiten Sperrglieds (21) hineinragt.

10. Trageinrichtung nach den Ansprüchen, 2 und 6, **dadurch gekennzeichnet, dass** der die Stützwand (16) und die Führungswand (17) durchdringende Lagerbolzen (23) auf der dem Drehelement (22) abgekehrten Seite mit einer Schraubenmutter (33) versehen ist, die das erste Sperrglied (20) an der Führungswand (17) hält.

11. Trageinrichtung nach Anspruch 10, **dadurch gekennzeichnet, dass** zwischen erstem Sperrglied (20) und Schraubenmutter (33) ein Federelement vorgesehen ist.

12. Trageinrichtung nach Anspruch 11, **dadurch gekennzeichnet, dass** das Federelement eine Tellerfeder (34) ist, wobei zwischen Tellerfeder (34) und Schraubenmutter eine Stützscheibe (35) eingesetzt ist.

13. Trageinrichtung nach einem oder mehreren der vorangehenden Ansprüchen, **dadurch gekennzeichnet, dass** von der Seite auf die Führungsschiene (9) bzw. die Stützschiene (11) gesehen, das erste Sperrglied (20) beiderseits des Lagerbolzens (23) erhabene zur Führungswand (17) hin gerichtete Stützglieder (38 und 39) besitzt.

14. Trageinrichtung nach Anspruch 13, **dadurch gekennzeichnet, dass** die Stützglieder (38 und 39) des Sperrglieds (20) als Federelemente wirken.

15. Trageinrichtung nach Anspruch 1, **dadurch gekennzeichnet, dass** zur Bedienung der Festsetzeinrichtung (15) ein Handhebel (44) vorgesehen ist.

16. Trageinrichtung nach den Ansprüchen 5 und 15, **dadurch gekennzeichnet, dass** der Handhebel (44) fest mit dem Drehelement (22) verbunden ist.

17. Trageinrichtung nach den Ansprüchen 15 und 16, **dadurch gekennzeichnet, dass** der Handhebel (44) zur Bewegung des Drehelements (22) zwischen Sperrstellung (Sst) und Entriegelungsstellung (Est) etwa einen Winkel (α) von 90° beschreibt.

18. Trageinrichtung nach Anspruch 17 **dadurch gekennzeichnet, dass** der Handhebel (44 und 48) zumindest in der Entriegelungsstelung (Est) mittels einer Rasteinrichtung (45) in Lage gehalten wird.

19. Trageinrichtung nach einem oder mehreren der vorangehenden Ansprüche, **dadurch gekennzeichnet, dass** für den Handhebel (44 und 48) zumindest in der Sperrstellung (Sst) sichtbare Kennzeichnungen (51) vorgesehen sind.
